# EUROPÄISCHE PATENTSCHRIFT

(11) **EP 3 454 819 B1**
(45) Veröffentlichungstag und Bekanntmachung des Hinweises auf die Patenterteilung: **29.04.2020**
(21) Anmeldenummer: 17709633.6
(22) Anmeldetag: 06.03.2017
(51) Int. Cl.: G01L 5/00, G01M 99/00, G01L 1/00, B65B 57/04, A61J 3/07

(54) **VORRICHTUNG UND VERFAHREN ZUR ERMITTLUNG EINER SCHLIESSKRAFT BEIM VERSCHLIESSEN EINER KAPSEL**
DEVICE AND METHOD FOR DETERMINING A CLOSING FORCE DURING THE CLOSURE OF A CAPSULE
DISPOSITIF ET PROCÉDÉ POUR DÉTERMINER UNE FORCE DE FERMETURE LORS DE LA FERMETURE D'UNE GÉLULE

(30) Priorität: 09.05.2016 DE 102016207923
(43) Veröffentlichungstag der Anmeldung: 20.03.2019
(73) Patentinhaber: Syntegon Technology GmbH, 71332 Waiblingen (DE)
(72) Erfinder: RUNFT, Werner, 71364 Winnenden (DE); BRAITO, Andreas, 73655 Pluederhausen (DE); SCHLIPF, Jens, 71691 Freiberg A. N. (DE); BOEHRINGER, Walter, 73630 Remshalden (DE)
(74) Vertreter: DREISS Patentanwälte PartG mbB
(86) Internationale Anmeldenummer: PCT/EP2017/055123
(87) Internationale Veröffentlichungsnummer: WO 2017/194220

(56) Entgegenhaltungen:
- DE-A1- 3 830 013
- DE-C1- 10 001 068
- US-B1- 6 425 422

## Beschreibung

### Stand der Technik

Die vorliegende Erfindung betrifft eine Vorrichtung und ein Verfahren zur Ermittlung einer Schließkraft beim Verschließen einer Kapsel nach der Gattung der unabhängigen Ansprüche.

Aus der DE 10001068 C1 ist bereits eine Vorrichtung zum Dosieren und Abgeben von Pulver in Hartgelatinekapseln oder dergleichen bekannt. Diese Vorrichtung umfasst eine schrittweise gedrehte Dosierscheibe, in deren Grund Bohrungen ausgebildet sind, die mit auf-und abbeweglichen Stopfstempeln zusammenwirken. Die Stopfstempel sind auf einen gemeinsamen Stopfstempelträger angeordnet und pressen beim Eintauchen in Bohrungen das Pulver zu Presslingen. Um Brüche von Federn erkennen sowie eine Aussage über die Masse der Presslinge treffen zu können, sind Mittel vorgesehen, die den Federweg der den Ausstoßstempeln unmittelbar vorgeschalteten Stopfstempeln erfassen.

Weitere gattungsgemäße Vorrichtungen sind in der US 6425422 B1 bzw. DE 3830013 A1 gezeigt.

Es ist Aufgabe der vorliegenden Erfindung, den Stand der Technik weiter zu verbessern. Diese Aufgabe wird gelöst durch die Merkmale der unabhängigen Ansprüche.

### Vorteile der Erfindung

Die erfindungsgemäße Vorrichtung und das erfindungsgemäße Verfahren mit den Merkmalen der unabhängigen Ansprüche haben demgegenüber den Vorteil, dass eine Detektion fehlerhafter oder beschädigter Kapseln während bzw. unmittelbar nach einem Schließvorgang möglich ist. Durch eine frühzeitige Erkennung einer fehlerhaft geschlossenen Kapsel oder einer fehlerhaften Kapsel an sich können diese der Prozesskette entnommen werden. Dadurch werden Maschinenstörungen, die durch beschädigte Kapseln auftreten können, verhindert. Dies wird erfindungsgemäß dadurch möglich, dass zumindest ein Kraftsensor vorgesehen ist zur Aufnahme einer Kraft, die beim Verschließen auf die Kapsel einwirkt.

In einer zweckmäßigen Weiterbildung ist zumindest eine Auswerteeinheit vorgesehen, die den Verlauf der Kraft, vorzugsweise in Abhängigkeit von einer Strecke, die das Verschließmittel zurücklegt, erfasst. Gerade die Abhängigkeit von der Strecke lässt genauere Rückschlüsse auf die unterschiedlichen Ursachen eines Fehlers zu. So kann das Aufeinandertreffen zweier Kapselhälften anhand des Verlaufs der Kraft erkannt werden.

In einer zweckmäßigen Weiterbildung ist eine Auswerteeinheit vorgesehen ist, die die Kraft mit zumindest einem Grenzwert vergleicht, insbesondere zur Erkennung einer fehlerhaften oder beschädigten Kapsel. Ist beispielsweise die Kraft vor dem Einschnappen der beiden Kapselhälften ineinander über einem bestimmten Niveau, so ist der Schließvorgang fehlerhaft und die Kapsel kann anschließend aussortiert werden.

In einer zweckmäßigen Weiterbildung ist vorgesehen, dass zumindest ein Grenzwert abhängt von einer Strecke, die das Verschließmittel zurücklegt. Hierbei wird dem Umstand Rechnung getragen, dass sich die Kraft auch während eines regulären Schließvorgangs ändert, sodass bei einer Anpassung der Grenzwerte eine genauere Ermittlung einer fehlerhaften Kapsel möglich ist.

In einer zweckmäßigen Weiterbildung ist vorgesehen, dass der Kraftsensor in zumindest einem Gegenhalter und/oder in dem Verschlussmittel angeordnet ist. In diesen bevorzugten Stellen lässt sich besonders einfach der Kraftverlauf detektieren. Besonders bevorzugt ist hierbei der Kraftsensor so angeordnet, dass er mit dem Kapseloberteil in Berührung kommt, insbesondere mit dessen Spitze.

In einer zweckmäßigen Weiterbildung wird dann auf eine ordnungsgemäße Kapsel geschlossen, wenn die Kraft in einem unteren Streckenbereich, insbesondere zu Beginn des Schließvorgangs, einen ersten Grenzwert nicht überschreitet und/oder die Kraft in einem oberen Streckenbereich, insbesondere zum Ende des Schließvorgangs, einen weiteren Grenzwert überschreitet. Gerade am Anfang Schließvorgangs werden die Kapselteile ineinandergeschoben, ohne dass die beiden Kapselhälften dabei kollidieren. Entsprechend sollte somit im Anfangsbereich kein signifikanter Kraftanstieg bei einem ordnungsgemäßen Verschließen zu erkennen sein. Erst gegen Ende des Schließvorgangs schnappen die beiden Kapselhälften ineinander ein, was zu einem zulässigen Kraftanstieg führt. Dieser Kraftanstieg muss jedoch erfolgen, da ansonsten dieses erforderliche Einschnappen nicht stattgefunden hat. Dies lässt sich über einen entsprechenden Grenzwert, vorzugsweise gegen Ende des Schließvorgangs, ebenfalls überwachen.

In einer zweckmäßigen Weiterbildung wird ein oberer Grenzwert so gewählt, dass bei einem Überschreiten der Kraft auf eine fehlerhafte oder beschädigte Kapsel geschlossen wird. Ein Überschreiten dieser geeignet gewählten Obergrenze würde ansonsten insbesondere auf fehlerhafte eingedrückte Kapseln hindeuten.

In einer zweckmäßigen Weiterbildung wird in Abhängigkeit von der Kraft zumindest eine Ausstoßstation zum Ausstoß zumindest einer fehlerhaften bzw. beschädigten Kapsel angesteuert. Damit lassen sich die gewonnenen Informationen für eine automatische Abführung fehlerhafter Kapseln aus dem laufenden Produktionsprozess verwenden.

In einer zweckmäßigen Weiterbildung ist zumindest ein Wegaufnehmer vorgesehen zur Erfassung der Strecke. Damit lässt sich zuverlässig der streckenabhängige Kraftverlauf bestimmen.

Weitere zweckmäßige Weiterbildungen ergeben sich aus weiteren abhängigen Ansprüchen und aus der Beschreibung.

### Zeichnung

Ausführungsbeispiele der erfindungsgemäßen Vorrichtung sind in der Zeichnung dargestellt und werden nachfolgend näher beschrieben.

Es zeigen:
Figur 1 eine Stationsübersicht einer Vorrichtung zum Füllen und Verschließen einer Kapsel,
die Figur 2 eine Ansicht unterschiedlicher fehlerhafter Kapseln,
die Figur 3 einen Schnitt durch eine Vorrichtung zum Ermitteln einer Schließkraft,
die Figur 4 ein Kraftverlauf während eines Schließvorgangs von Kapseln in einem Kraft-Weg-Diagramm sowie
Die Figur 5 ein alternatives Ausführungsbeispiel der Vorrichtung zum Ermitteln einer Schließkraft mit Überlastschutz.

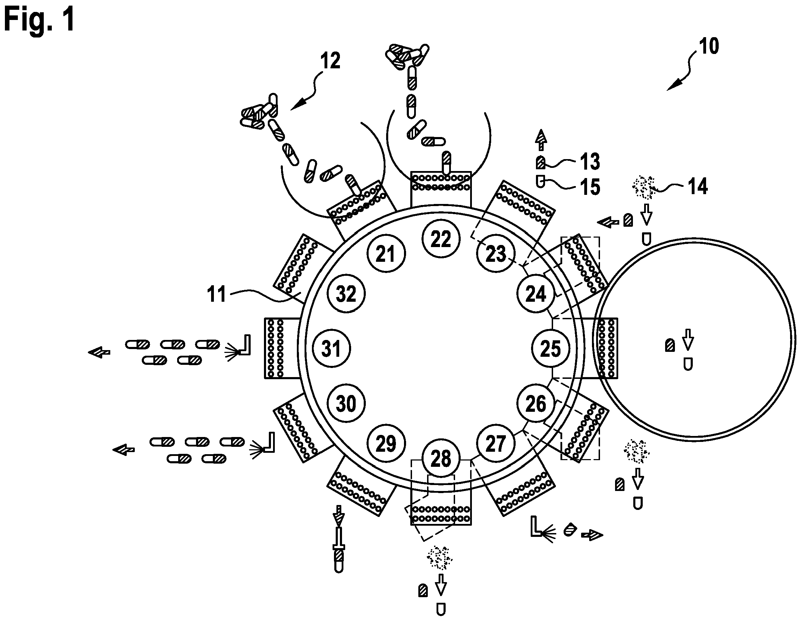

Das Ausführungsbeispiel gemäß Figur 1 zeigt eine Übersicht über verschiedene Stationen einer Vorrichtung 10 zum Füllen und Verschließen von Kapseln 12, vorzugsweise Hartkapseln, insbesondere Hartgelatinekapseln. Ein Kapselhalter 11 umfasst verschiedene Aufnahmen für Kapseln 12, um sie unterschiedlichen Arbeitsstationen 21-32 zuzuführen. Die Kapseln 12, bestehend aus einem Kapseloberteil 13 und einem Kapselunterteil 15, werden in zumindest einer Sortierstation 21, 22, vorzugsweise zwei Sortierstationen, dem jeweiligen Kapselhalter 11 zugeführt. In einer Station 23 zur Kapseloberteiltastung wird überprüft, ob die dem Kapselhalter 11 zugeführten Kapseln 12 vollzählig vorhanden sind. Diese Station 23 kann auch nur als Option vorgesehen werden. Die so geprüften Kapseln 12 gelangen durch eine Drehung des Segmentrads zu einer Füllstation 24, vorzugsweise für sogenannte Pellets. Diese Füllstation 24 kann optional vorgesehen sein. In einer Füllstation 25 wird den Kapseln 12 Füllgut 14 zugeführt. Hierbei handelt es sich üblicherweise um pulverförmige Medikamente, die in die Kapseln 12 verbracht werden. Jedoch auch Pellets oder Flüssigkeiten als Füllgut 14 können in die Kapseln 12 gebracht werden. In Verbindung beispielsweise mit einer Dosierscheibe zur Abfüllung von Pulver oder Pellets werden die Kapselunterteile 15 mit der gewünschten Füllmenge an Füllgut 14 befüllt. Hierbei können unterschiedliche Füllprinzipien zum Einsatz kommen. Hieran schließt sich eine weitere Füllstation 26 an. Diese Füllstation 26 kann beispielsweise für Pellets optional vorgesehen werden. Hieran schließt sich eine Fehlerkapselstation 27 an. In dieser Station 27 werden nicht getrennte, falsch eingesetzte oder Kapseln 12 mit einem sogenannten Doppelhut ausgeworfen. Damit werden fehlerhafte Kapseln 12 ausgeschleust. Hieran schließt sich eine weitere Füllstation 28, beispielsweise für Pellets oder Tabletten an. Diese Füllstation 28 kann optional vorgesehen werden. In einer Schließstation 29 werden die befüllten Kapselunterteile 15 mit zugehörigen Kapseloberteilen 13 verschlossen. In der Schließstation 29 ist eine Vorrichtung 20 zur Ermittlung einer Schließkraft wie nachfolgend weiter beschrieben integriert. Als nächste Station schließt sich ein Kapselausstoß 30 an. Dort werden die befüllten und verschlossenen Kapseln 12 aus dem Kapselhalter 11 ausgestoßen und weiteren Verarbeitungsschritten zugeführt. Hier könnten über die Vorrichtung 20 zur Aufnahme der Schließkraft erkannte fehlerhafte Kapseln 16 im Rahmen dieser Auswurfstation entfernt werden. Auch die nächste Station dient einem Kapselausstoß 31, um die Ausbringungsmenge zu erhöhen. In den Auswurfstationen 30, 31 können die Kapseln 12 individuell ausgeworfen werden oder Kapselhalter 11 verbleiben. Eine Reinigungsstation 32 dient der Reinigung der nun leeren oder noch als schlecht erkannten Kapseln 12 im Kapselhalter 11. Das Segmentrad hat nun einen kompletten Umlauf erfahren, sodass der Kapselhalter 11 wieder für die Sortierstation 21 bzw. 22 zur Verfügung steht.

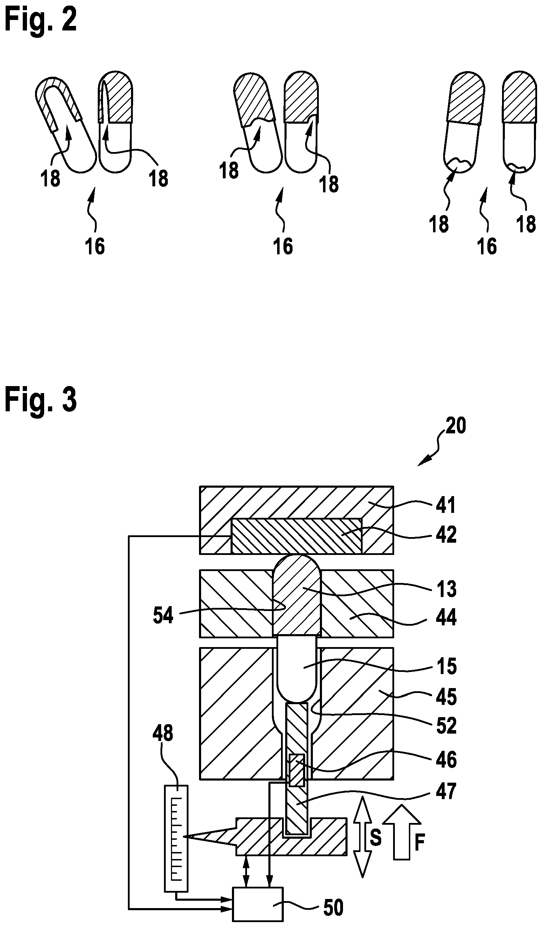

In Figur 2 sind verschiedene beschädigte Kapseln 16 gezeigt. Die beschädigten Kapseln 16 weisen unterschiedliche Schadstellen 18 auf. Hierbei können ganze Partien der Kapseloberteile 13 fehlen wie im linken Paar gezeigt. Oder aber Schadstellen 18 zeigen sich darin, dass der umlaufende Rand des Kapseloberteils 13 nicht geradlinig umläuft wie in der Mitte gezeigt. Bei der Ansicht des rechten Paars wurden die Kapselunterteile 15 eingedrückt, was ebenfalls als Schadstelle 18 angesehen wird.

Das Ausführungsbeispiel gemäß Figur 3 zeigt eine Vorrichtung 20 zur Ermittlung einer Schließkraft beim Verschließen einer Kapsel 12. Diese Vorrichtung 20 umfasst zumindest ein Unterteilsegment 45. Dieses Unterteilsegment 45 weist vorzugsweise eine Öffnung 52 auf. Diese Öffnung 52 dient zur Aufnahme der Kapsel 12, insbesondere des Kapselunterteils 15. Außerdem wird die Öffnung 52 verjüngend nach unten weitergeführt, so dass durch diese Öffnung 52 ein Stift 47 insbesondere zum Schließen der Kapsel 12 eingeführt werden kann. Der Stift 47 ist beweglich gelagert. Der Stift 47 ist hierbei so ausgebildet, dass er auf den Boden des Kapselunterteils 15 einwirken kann im Sinne eines Verschließens der Kapseln 12. Dies kann zum einen dadurch erfolgen, dass das Kapselunterteil 15 angehoben wird in Richtung zu einem Kapseloberteil 13. Dieses Kapseloberteil 13 steht in einem Oberteilsegment 44 bereit. Auch das Oberteilsegment 44 weist eine Öffnung 54 auf zur Aufnahme des Kapseloberteils 13. Die Öffnung 54 ist hierbei so gestaltet, dass das Kapseloberteil 13 über das Oberteilsegment 44 herausragen kann. Dadurch kann die Spitze des Kapseloberteils 13 in Kontakt kommen mit einem Kraftsensor 42. Der Kraftsensor 42 wiederum befindet sich in einem Gegenhalter 41. Der Gegenhalter 41 dient dazu, dass der Kraftsensor 42 ortsfest gehalten wird und durch eine nach oben drückende Kapsel 12 auch nicht verschoben wird. Der Kraftsensor 42 ist vorzugsweise senkrecht zur Bewegungsrichtung des Stifts 47 orientiert. Dadurch kann er die Kraft F aufnehmen, die das Kapseloberteil 13 beim Verschließen auf den Kraftsensor 42 einbringt. Der Stift 47 ist ein Beispiel für ein Verschließmittel. Das Verschließmittel könnte auch als Stößel oder sonstiges bewegliches Teil ausgebildet sein, welches eine Kraft auf das Kapseloberteil 13 und/oder das Kapselunterteil 15 zum Zwecke des Verschließens der beiden Kapselteile aufbringt.

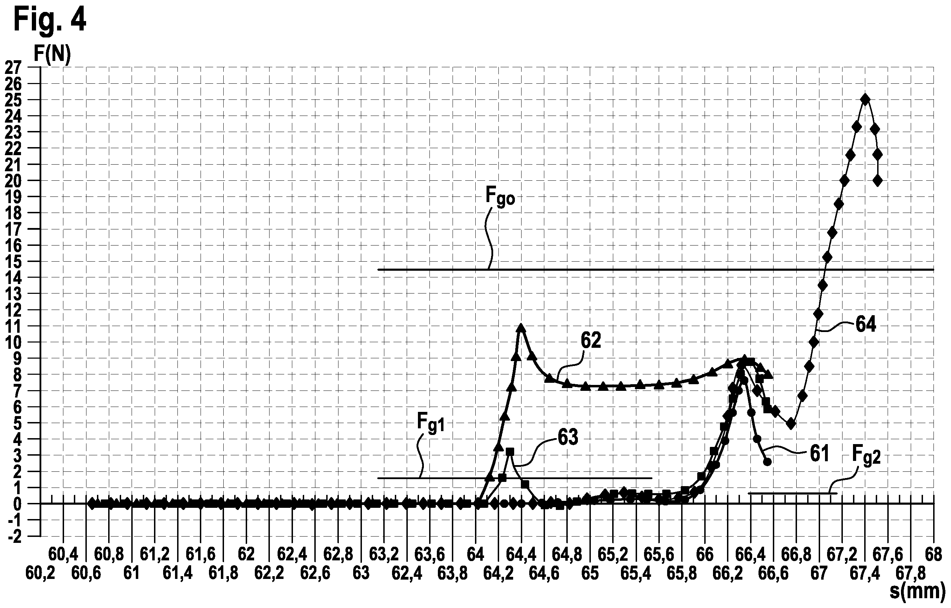

Die Vorrichtung 20 arbeitet hierbei wie folgt. Der Stift 47 bzw. der Schließstift drückt das vom Unterteilsegment 45 geführte Kapselunterteil 15 in das vom Oberteilsegment 44 geführte Kapseloberteil 13. Das Kapseloberteil 13 drückt dabei auf den Kraftsensor 42, welcher vom Gegenhalter 41 aufgenommen ist. Alternativ kann ein Kraftsensor 46 unterhalb der Kapsel 12 zur Aufzeichnung eingesetzt werden. Während der Aufwärtsbewegung des Stifts 47 werden der Hub des Stifts 47 bzw. die Strecke s und die Schließkraft F, die für das Schließen der Kapsel 12 erforderlich ist, aufgezeichnet. Der Weg bzw. die Strecke s wird mit einem Wegaufnehmer 48 und die Kraft F mit dem Kraftsensor 42 oder dem im Stift angeordneten Kraftsensor 46 aufgezeichnet. Die Werte werden in einem Kraft-Weg-Diagramm wie in Figur 4 dargestellt.

Eine erste Kennlinie 61 zeigt den Kraftverlauf des Schließvorganges einer Kapsel 12, die ordnungsgemäß geschlossen wurde. Das Kapselunterteil 15 wird in das Kapseloberteil 13 geschoben, ohne dass die beiden Kapselhälften 13,15 dabei kollidieren. Im Bereich zwischen 66 mm bis 66,6 mm erkennt man das ordnungsgemäße Einschnappen der beiden Kapselhälften 13,15 ineinander, was mit einem Kraftanstieg und anschließendem Kraftabfall einhergeht.

Eine zweite Kennlinie 62 zeigt den Kraftverlauf des Schließvorganges einer Kapsel 12, bei der das Kapselunterteil 15 beim Hochschieben nicht in das Kapseloberteil 13 trifft. Die beiden Kapselhälften 13,15 kollidieren, dabei schneidet eine der beiden Kapselhälften 13,15 ein, es entsteht ein sogenannter Splicer. Die Kollision ist bei 64 mm erkennbar, während des Einschneidens bleibt die Kraft F auf einem erhöhten Niveau.

Eine dritte Kennlinie 63 zeigt den Kraftverlauf des Schließvorganges einer Kapsel 12, bei der das Kapselunterteil 15 beim Hochschieben nicht in das Kapseloberteil 13 trifft. Die beiden Kapselhälften 13,15 kollidieren, das Kapselunterteil 15 rutscht trotz Kollision in das Kapseloberteil 13. Die Kollision ist bei 64 mm erkennbar, bei 64,6 mm ist keine Kraft F mehr zu erkennen. Das Kapselunterteil 15 schneidet also nicht ein. Von 66 mm bis 66,6 mm erkennt man das ordnungsgemäße Einschnappen der beiden Kapselhälften 13,15 ineinander. Durch die Kollision können Beschädigungen an der Kapsel 12 entstehen.

Eine vierte Kennlinie 64 zeigt den Kraftverlauf des Schließvorganges einer Kapsel 12, bei der entweder das Kapseloberteil 13 oder das Kapselunterteil 15 eingedrückt wurde. Dies wird deutlich an dem erneuten und hohen Kraftanstieg nach dem Einschnappen von Kapseloberteil 13 und Kapselunterteil 15.

Durch das Setzen von geeigneten Grenzbedingungen können beschädigte Kapseln 16 aussortiert werden. Ist eine Kraft F vor dem Einschnappen der beiden Kapselhälften ineinander über einem bestimmten ersten Grenzwert Fg1, ist der Schließvorgang fehlerhaft und die Kapsel kann anschließend aussortiert werden. Dieser Grenzwert Fg1 ist vorzugsweise zu Beginn des Schließvorgangs aktiv. Dies gilt auch für eine generell definierte Obergrenze Fgo. Über die Obergrenze Fgo werden eingedrückte Kapseln 16 wie in dem rechten Paar der Figur 2 dargestellt detektiert. Durch das Setzen eines weiteren Grenzwerts Fg2 auf einem relativ niedrigen Kraftniveau, nach dem Einschnappen der beiden Kapselhälften 13,15 ineinander, wird erkannt, ob überhaupt ein Schließvorgang stattgefunden hat. Ist die Kraft F im Verlauf der Strecke s, vorzugsweise gegen Ende des Schließvorgangs, über dem weiteren Grenzwert Fg2, so fand ein ordnungsgemäßer Schließvorgang statt, andernfalls nicht.

Die entsprechenden Signalerfassung und Signalauswertungen können über eine Auswerteeinheit 50 vorgenommen werden. Hierbei ermittelt die Auswerteeinheit 50 die detektierte Kraft F entlang der Strecke s, welche über den Wegaufnehmer 48 erfasst wird. In der Auswerteeinheit 50 können entsprechende Grenzwerte Fg1, Fg2, Fgo hinterlegt sein. Diese Grenzwerte Fg1, Fg2, Fgo können abhängig von der Strecke s gewählt werden. Bei einem ordnungsgemäßen Schließvorgang muss die Kraft F in einem vorderen Streckenbereich sv unterhalb des ersten Grenzwerts Fg1 bleiben. Für einen hinteren Streckenbereich sh muss die Kraft F den weiteren Grenzwert Fg2 überschreiten. Über den kompletten Streckenverlauf sges muss jedoch die Kraft F unterhalb des oberen Grenzwerts Fgo bleiben.

Die Auswerteeinheit 50 ist vorzugsweise so eingerichtet, dass diese eine Auswurfstation, beispielsweise den Kapselausstoß 30, 31 ansteuert, die fehlerhafte Kapseln 16 aus dem Kapselhalter 11 ausstößt und diese aus dem weiteren Produktionsprozess entfernt oder absichtlich belässt, damit die fehlerhafte Kapsel 16 an der Reinigungsstation 31, 32 entfernt werden kann. Parallel dazu erfolgt eine entsprechende Aufzeichnung der Kraftverläufe F (s) abhängig von der Strecke s. Dies kann auch für weitere statistische Auswertungen oder Verknüpfung mit Informationen über eine bevorstehende Wartung der Vorrichtung 10 bei einer Häufung von beschädigten Kapseln 16 verwendet werden.

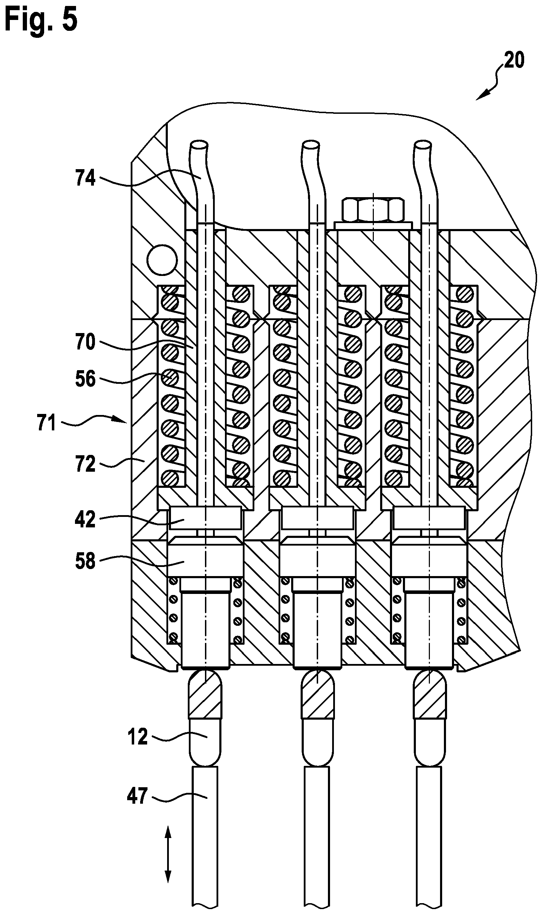

Das Ausführungsbeispiel gemäß Figur 5 zeichnet sich durch einen Überlastschutz 71 aus. Hierbei ist der Kraftsensor 42 an einem beweglichen Teil 70 angeordnet, welches über eine Feder 56 mit einer Aufnahme 72 beweglich verbunden ist. Der Kraftsensor 42 nimmt wie bereits beschrieben die auf die Kapsel 12 wirkende Schließkraft F auf. Dies erfolgt über einen Druckstift 58, an dessen Unterseite das Kapseloberteil 13 einwirkt. Auf das Kapselunterteil 15 wirkt der Schließstift 47 ein wie bereits beschrieben.

Im Normalbetrieb bewegt sich der Kraftsensor 42 nicht und nimmt die auf die Kapsel 12 einwirkende Schließkraft F, weitergeleitet durch den Druckstift 58, auf. Wirkt jedoch eine zu große Kraft auf den Kraftsensor 42, wird die Federvorspannung der Feder 56 überwunden und das bewegliche Teil 70 mit dem daran befestigten Kraftsensor 42 nach oben gedrückt. Dadurch kann der Kraftsensor 42 gegen zu große Kräfte geschützt werden, die diesen zerstören könnten.

Im Inneren des beweglichen Teils 70 ist ein Kabel 74 nach außen geführt, um die Signale des Kraftsensors 42 der Auswerteeinheit 50 zuzuführen. Beispielhaft sind drei Einheiten vorgesehen, die jeweils einen Kraftsensor 42 und/oder einen Druckstift 58 und/oder einen Schließstift 47 umfassen. Diese sind parallel zueinander angeordnet und variieren in ihrer Anzahl je nach Ausführung des Kapselhalters 11.

Die Vorrichtung und das Verfahren zur Ermittlung einer Schließkraft werden insbesondere in der Verpackungstechnik, insbesondere bei Kapselfüllmaschinen eingesetzt.

## Patentansprüche

1. Vorrichtung zur Ermittlung einer Schließkraft einer Kapsel (12), umfassend zumindest ein Unterteilsegment (45) zur Aufnahme zumindest eines Kapselunterteils (15), zumindest ein Oberteilsegment (44) zur Aufnahme zumindest eines Kapseloberteils (13), zumindest ein Verschließmittel (47), das zum Verschließen der Kapsel auf Kapselunterteil (15) und/oder Kapseloberteil (13) einwirkt, **dadurch gekennzeichnet, dass** zumindest ein Kraftsensor (42,46) zur Aufnahme einer Kraft (F) vorgesehen ist, die beim Verschließen auf die Kapsel (12) einwirkt.

2. Vorrichtung nach Anspruch 1, **dadurch gekennzeichnet, dass** zumindest eine Auswerteeinheit (50) vorgesehen ist, die einen Verlauf der Kraft (F), vorzugsweise in Abhängigkeit von einer Strecke (s), die das Verschließmittel (47) zurücklegt, erfasst.

3. Vorrichtung nach einem der vorhergehenden Ansprüche, **dadurch gekennzeichnet, dass** zumindest eine Auswerteeinheit (50) vorgesehen ist, die die Kraft (F) mit zumindest einem Grenzwert (Fgl, Fg2, Fgo) vergleicht, insbesondere zur Erkennung einer fehlerhaften oder beschädigten Kapsel (16).

4. Vorrichtung nach einem der vorhergehenden Ansprüche, **dadurch gekennzeichnet, dass** zumindest ein Grenzwert (Fgl, Fg2, Fgo) abhängt von einer Strecke (s), die das Verschließmittel (47) zurücklegt.

5. Vorrichtung nach einem der vorhergehenden Ansprüche, **dadurch gekennzeichnet, dass** der Kraftsensor (42,46) in zumindest einem Gegenhalter (41) und/oder in dem Verschließmittel (47) angeordnet ist.

6. Vorrichtung nach einem der vorhergehenden Ansprüche, **dadurch gekennzeichnet, dass** der Kraftsensor (42) so angeordnet ist, dass er mittelbar, vorzugsweise über einen Druckstift (58), oder unmittelbar mit dem Kapseloberteil (13) in Berührung kommt, insbesondere mit dessen Spitze.

7. Vorrichtung nach einem der vorhergehenden Ansprüche, **dadurch gekennzeichnet, dass** auf eine ordnungsgemäße Kapsel (12) dann geschlossen wird, wenn die Kraft (F) in einem unteren Streckenbereich (su), insbesondere zu Beginn des Schließvorgangs, einen ersten Grenzwert (Fg1) nicht überschreitet und/oder die Kraft (F) in einem oberen Streckenbereich (so), insbesondere zum Ende des Schließvorgangs, einen weiteren Grenzwert (Fg2) überschreitet.

8. Vorrichtung nach einem der vorhergehenden Ansprüche, **dadurch gekennzeichnet, dass** ein oberer Grenzwert (Fgo) so gewählt ist, dass bei einem Überschreiten der Kraft (F) auf eine fehlerhafte oder beschädigte Kapsel (16) geschlossen ist.

9. Vorrichtung nach einem der vorhergehenden Ansprüche, **dadurch gekennzeichnet, dass** in Abhängigkeit von der Kraft (F) zumindest eine Ausstoßstation zum Ausstoß zumindest einer fehlerhaften bzw. beschädigten Kapsel (16) angesteuert ist.

10. Vorrichtung nach einem der vorhergehenden Ansprüche, **dadurch gekennzeichnet, dass** zumindest ein Wegaufnehmer (48) vorgesehen ist zur Erfassung der Strecke (s).

11. Vorrichtung nach einem der vorhergehenden Ansprüche, **dadurch gekennzeichnet, dass** zumindest ein Überlastschutz (71) vorgesehen ist, der den Kraftsensor (42) schützt, vorzugsweise in Verbindung mit einem Federelement (56).

12. Verfahren zur Ermittlung einer Schließkraft einer Kapsel, wobei zumindest ein Kapselunterteil (15) in ein Unterteilsegment (45) aufgenommen wird, wobei zumindest ein Kapseloberteil (13) in ein Oberteilsegment (44) aufgenommen wird, wobei zum Verschließen der Kapsel eine Kraft (F) auf Kapselunterteil (15) und/oder Kapseloberteil (13) einwirkt, **dadurch gekennzeichnet, dass** die Kraft (F), die beim Verschließen auf die Kapsel (12) einwirkt, ermittelt wird.

13. Verfahren nach dem vorhergehenden Anspruch, **dadurch gekennzeichnet, dass** die ermittelte Kraft (F) mit zumindest einem Grenzwert (Fgl, Fg2, Fgo) verglichen wird, insbesondere zur Erkennung einer fehlerhaften oder beschädigten Kapsel (16).

14. Verfahren nach den vorhergehenden Verfahrensansprüchen, **dadurch gekennzeichnet, dass** zumindest ein Grenzwert (Fgl, Fg2, Fgo) abhängt von einer Strecke (s), mit der ein Verschließmittel (47) verfahren wird beim Verschließen der Kapseln (12).

15. Verfahren nach einem der vorhergehenden Verfahrensansprüche, **dadurch gekennzeichnet, dass** zumindest ein Überlastschutz (71) eine Bewegung des Kraftsensors (42) im Falle einer Überlast ermöglicht.

## Claims

1. A device for determining a closing force of a capsule, comprising at least one bottom part segment (45) for receiving at least one capsule bottom part (15), at least one top part segment (44) for receiving at least one capsule top part (13), at least one closing means (47), which, for the closure of the capsule, acts on the capsule bottom part (15) and/or capsule top part (13), **characterized in that** at least one force sensor (42, 46), for registering a force (F) acting on the capsule (12) during the closure, is provided.

2. The device as claimed in claim 1, **characterized in that** at least one evaluating unit (50), which detects a progression of the force (F), preferably as a function of a path length (s) which is covered by the closing means (47), is provided.

3. The device as claimed in one of the preceding claims, **characterized in that** at least one evaluating unit (50), which compares the force (F) with at least one limit value (Fgl, Fg2, Fgo), in particular for the recognition of a defective or damaged capsule (16), is provided.

4. The device as claimed in one of the preceding claims, **characterized in that** at least one limit value (Fgl, Fg2, Fgo) is a function of a path length (s) which is covered by the closing means (47).

5. The device as claimed in one of the preceding claims, **characterized in that** the force sensor (42, 46) is arranged in at least one brace (41) and/or in the closing means (47).

6. The device as claimed in one of the preceding claims, **characterized in that** the force sensor (42) is arranged such that it comes into contact with the capsule top part (13), in particular with the tip thereof, indirectly, preferably via a pressure pin (58), or directly.

7. The device as claimed in one of the preceding claims, **characterized in that** a properly formed capsule (12) is then inferred if the force (F), in a lower path length range (su), in particular at the beginning of the closing operation, does not exceed a first limit value (Fg1), and/or the force (F), in an upper path length range (so), in particular at the end of the closing operation, exceeds a further limit value (Fg2).

8. The device as claimed in one of the preceding claims, **characterized in that** an upper limit value (Fgo) is chosen such that, if the force (F) exceeds this, a defective or damaged capsule(16) is inferred.

9. The device as claimed in one of the preceding claims, **characterized in that**, as a function of the force (F), at least one ejection station is actuated for the ejection of at least one defective or damaged capsule (16).

10. The device as claimed in one of the preceding claims, **characterized in that** at least one displacement transducer(48) is provided to detect the path length (s).

11. The device as claimed in one of the preceding claims, **characterized in that** at least one overload protection (71), which protects the force sensor (42), is provided, preferably in conjunction with a spring element (56).

12. A method for determining a closing force of a capsule, wherein at least one capsule bottom part (15) is received in a bottom part segment (45), wherein at least one capusule top part (13) is received in a top part segment (44), wherein, for the closure of the capsule, a force (F) acts on the capsule bottom part (15) and/or capsule top part (13), **characterized in that** the force (F) which acts on the capsule (12) during the closure is determined.

13. The method as claimed in the preceding claim, **characterized in that** the determined force (F) is compared with at least one limit value (Fgl, Fg2, Fgo), in particular for the recognition of a defective or damaged capsule (16).

14. The method as claimed in the preceding method claims, **characterized in that** at least one limit value (Fgl, Fg2, Fgo) is a function of a path length (s) by which a closing means (47) is transported during the closure of the capsules (12).

15. The method as claimed in one of the preceding method claims, **characterized in that** at least one overload protection (71) enables a movement of the force sensor (42) in the event of an overload.

## Revendications

1. Dispositif permettant de déterminer la force de fermeture d'une gélule (12) comprenant au moins un segment de partie inférieure (45) destiné à recevoir au moins une partie inférieure de gélule (15), au moins un segment de partie supérieure (44) destiné à recevoir au moins une partie supérieure de gélule (13), au moins un moyen de fermeture (47) agissant pour fermer la gélule sur la partie inférieure de gélule (15) et/ou sur la partie supérieure (13) de la gélule, **caractérisé en ce qu'**il est prévu au moins un capteur de force (42, 46) permettant de recueillir la force (F) qui agit sur la gélule (12) lors de la fermeture.

2. Dispositif conformé à la revendication 1, **caractérisé en ce qu'**il est prévu au moins une unité d'évaluation (50) qui détecte les variations de la force (F) de préférence en fonction du trajet (s) parcouru par le moyen de fermeture (47).

3. Dispositif conforme à l'une des revendications précédentes, **caractérisé en ce qu'**il est prévu au moins une unité d'évaluation (50) qui compare la force (F) à au moins une valeur limite (Fgl, Fg2, Fgo), en particulier pour identifier une gélule (16) défectueuse ou endommagée.

4. Dispositif conforme à l'une des revendications précédentes, **caractérisé en ce qu'**au moins une valeur limite (Fgl, Fg2, Fgo) dépend du trajet (s) parcouru par le moyen de fermeture (47).

5. Dispositif conforme à l'une des revendications précédentes, **caractérisé en ce que** le capteur de force (42, 46) est installé dans au moins une contre butée (41) et/ou dans le moyen de fermeture (47).

6. Dispositif conforme à l'une des revendications précédentes, **caractérisé en ce que** le capteur de force (42) est installé de sorte qu'il vienne indirectement en contact, de préférence par l'intermédiaire d'une tige de pression (58), ou directement en contact avec la partie supérieure (13) de la gélule, en particulier avec sa pointe.

7. Dispositif conforme à l'une des revendications précédentes, **caractérisé en ce qu'**on conclut à une gélule (12) correcte, si la force (F) ne dépasse pas, dans la zone inférieure (su) du trajet, en particulier au début du processus de fermeture, une première valeur limite (Fg1), et/ou si la force (F) dépasse, dans la zone supérieure (so) du trajet, en particulier à la fin du processus de fermeture une autre valeur limite (Fg2).

8. Dispositif conforme à l'une des revendications précédentes, **caractérisé en ce qu'**une valeur limite supérieure (Fgo) est choisie de sorte que, en cas de dépassement de celle-ci par la force (F) on conclue à la présence d'une gélule (16) défectueuse ou endommagée.

9. Dispositif conforme à l'une des revendications précédentes, **caractérisé en ce qu'**au moins un poste déjection est commandé en fonction de la force (F) pour éjecter au moins une gélule (16) défectueuse ou endommagée.

10. Dispositif conforme à l'une des revendications précédentes, **caractérisé en ce qu'**il est prévu au moins un collecteur de trajet (48) pour détecter le trajet (s).

11. Dispositif conforme à l'une des revendications précédentes, **caractérisé en ce qu'**il est prévu au moins un organe de protection anti-surcharge (71) qui protège le capteur de force (42), de préférence en liaison avec un élément de ressort (56).

12. Procédé permettant de déterminer la force de fermeture d'une gélule, selon lequel au moins une partie inférieure de gélule (15) est logée dans un segment de partie inférieure (45), et au moins une partie supérieure de gélule (13) est logée dans un segment de partie supérieure (44), selon lequel, pour fermer la gélule une force (F) agit sur la partie inférieure (15) de la gélule et/ou sur la partie supérieure (13) de la gélule, **caractérisé en ce que** la force (F) qui agit sur la gélule (12) lors de la fermeture est déterminée.

13. Procédé conforme à la revendication précédente, **caractérisé en ce que** la force (F) déterminée est comparée à au moins une valeur limite (Fgl, Fg2, Fgo) en particulier pour identifier une gélule (16) défectueuse ou endommagée.

14. Procédé conforme aux revendications de procédé précédentes, **caractérisé en ce qu'**au moins une valeur limite (Fgl, Fg2, Fgo) dépend du trajet (s) parcouru par un moyen de fermeture (47) lors de la fermeture de la gélule (12).

15. Procédé conforme à l'une des revendications de procédé précédentes, **caractérisé en ce qu'**au moins un organe de protection anti-surcharge (71) permet un déplacement du capteur de force (42) en cas de surcharge.
